(19) Europäisches Patentamt

European Patent Office

Office européen des brevets

(11) Veröffentlichungsnummer: **0 306 811 B1**

(12) # EUROPÄISCHE PATENTSCHRIFT

(45) Veröffentlichungstag der Patentschrift: **21.10.92**

(21) Anmeldenummer: **88114169.1**

(22) Anmeldetag: **31.08.88**

(51) Int. Cl.⁵: **H04N 1/40**, G06F 15/68

(54) **Industrielles Bildverarbeitungssystem.**

(30) Priorität: **03.09.87 DE 3729435**

(43) Veröffentlichungstag der Anmeldung:
**15.03.89 Patentblatt 89/11**

(45) Bekanntmachung des Hinweises auf die
Patenterteilung:
**21.10.92 Patentblatt 92/43**

(84) Benannte Vertragsstaaten:
**AT CH DE FR IT LI**

(56) Entgegenhaltungen:
**WO-A-86/03866**
**GB-A- 1 430 724**
**US-A- 4 497 066**
**US-A- 4 613 269**

**IBM TECHNICAL DISCLOSURE BULLETIN,
Band 29, Nr. 5, Oktober 1986, Seiten
2296-2297, New York, US; "Requantization
process for image data"**

**PATENT ABSTRACTS OF JAPAN, Band 10,
Nr. 50 (E-384), 27. Februar 1986; & JP-A-60
201 777 (TATEISHI DENKI K.K.) 12-10-1985**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Rumland, Rainer Grundig E.M.V.
Max Grundig holländ Stiftung & Co KG
Kurgartenstrasse 37 D-8510 Fürth/Bay(DE)**
Erfinder: **Pfändner, Werner Grundig E.M.V.
Max Grundig holländ Stiftung& Co KG
Kurgartenstrasse 37 D-8510 Fürth/Bay(DE)**

## Beschreibung

Die Erfindung betrifft ein industrielles Bildverarbeitungssystem mit den im Oberbegriff des Anspruchs 1 angegebenen Merkmalen.

Ein derartiges Bildverarbeitungssystem kann für die unterschiedlichsten Bildverarbeitungsaufgaben in der Industrie eingesetzt werden. Beispielhaft werden folgende Anwendungsmöglichkeiten genannt:

- Zentrieren eines Werkstückes, um ein Loch innerhalb des Werkstückes an eine Sollstelle eines anderen Werkstückes zu plazieren;
- Positionieren eines Werkstückes, um das Werkstück in eine für die Weiterverarbeitung notwendige Lage zu bringen;
- Kontrollieren eines Werkstückes, um das Vorhandensein von Löchern, Zähnen und Zwischenräumen zu überprüfen;
- Signalisieren, wenn ein auf einem Transportband beförderter Gegenstand einen bestimmten Toleranzbereich verläßt; und
- Ausmessen von Werkstücken, um zu überprüfen, ob Zwischen- oder Endprodukte bei der Fertigung die gewünschten Abmessungen aufweisen.

Ein Bildverarbeitungssystem mit den im Oberbegriff des Anspruchs 1 angegebenen Merkmalen arbeitet nach folgendem Grundprinzip:

Mindestens eine Kamera ist auf den zu bearbeitenden Gegenstand gerichtet und erzeugt ein Abbild des Gegenstandes in Form von elektrischen Signalen, die an eine Videosignalverarbeitungsschaltung weitergeleitet werden. In dieser Videosignalverarbeitungsschaltung wird beispielsweise eine durch ungleichmäßige Ausleuchtung, Shadow-Fehler der Kamera(s) und Verschmutzungen des Hintergrundes verursachte unerwünschte ungleichmäßige Hintergrund-Wiedergabe verbessert. Ferner wird in der Videosignalverarbeitungsschaltung durch Veränderung der Aussteuerungskurve der Kontrast zwischen Werkstück und Hintergrund erhöht, das Videosignal verstärkt, eine Konturhervorhebung durchgeführt und das Videosignal binär quantisiert. Bei dieser binären Quantisierung wird nur zwischen Hell und Dunkel unterschieden, wobei eine Quantisierungsschwelle die Entscheidungsgrenze zwischen Hell und Dunkel festlegt.

Das binär quantisierte Videosignal wird anschließend einer Recheneinheit zugeführt, dort nach bestimmten vom jeweiligen Anwendungsfall abhängigen Kriterien ausgewertet und (nach anschließender D/A-Wandlung) auf einem Monitor dargestellt. Weiterhin werden - ebenfalls in Abhängigkeit vom jeweiligen Anwendungsfall - eine oder mehrere Hilfsmarkierungen (Fadenkreuze, Meßfenster, Toleranzlinien) und gegebenenfalls zur Benutzerführung vorgesehener Text in das Monitorbild eingeblendet. Mittels eines Bedienteiles, welches an die Recheneinheit angeschlossen ist, kann der Benutzer bestimmte Vorgänge, wie beispielsweise eine Verschiebung des Werkstückes nach links, in die Wege leiten. Selbstverständlich können die genannten Vorgänge auch automatisch eingeleitet werden. Beispielsweise kann eine notwendige Verschiebung des Werkstückes mittels eines von einem Ausgangssignal der Recheneinheit gesteuerten Greifarmes durchgeführt werden.

Die in der Videosignalverarbeitungsschaltung ablaufenden Vorgänge (Verbesserung der ungleichmäßigen Hintergrund-Wiedergabe, Veränderung der Aussteuerungskurve, Verstärkung des Videosignals und Wahl der Quantisierungsschwelle) erfolgen in Abhängigkeit von einem vom Benutzer mittels des Bedienteiles gesteuerten Lernprozeß.

In diesem Lernprozeß wird dem System ferner mitgeteilt, welche Aufgabe durchgeführt und welche Kamera zur Abbildung des Werkstückes verwendet werden soll. Weiterhin erhält das System während des Lernprozesses Auskunft darüber, welche Maßnahmen in welchen Betriebsfällen ergriffen werden müssen. So könnte beispielsweise eingegeben werden, daß dann, wenn ein zu positionierendes Werkstück nach rechts von der Sollposition, welche durch ein Meßfenster dargestellt wird, abweicht, das System über einen bestimmten Ausgang einen dort angeschlossenen Greifarm ansteuern soll, der das Werkstück nach links verschiebt.

Aus der US-Patentschrift US-A-4 613 269 ist ein Bildverarbeitungssystem in einer Roboteranwendung bekannt, bei der Bilddaten erfaßt werden. Dieses System besteht aus einer Aufnahmekamera, einer Videosignalverarbeitungsschaltung zur Verarbeitung der von der Kamera gelieferten Videosignale, insbesondere zur Ermittlung von Quantisierungsschwellen, und einer Bedieneinheit zur Eingabe von Befehlen. Weiterhin ist ein Monitor zur Anzeige des Videosignales enthalten und eine Recheneinheit zur Bildsignalauswertung einzelner Bildauschnitte. Mit der Recheneinheit ist eine Eingangs-/Ausgangsschaltung verbunden.

Ein Nachteil der bisher beschriebenen Systeme besteht darin, daß in der Praxis trotz der in der Videosignalverarbeitungsschaltung erfolgenden Hintergrundkorrektur nicht immer sichergestellt werden kann, daß zwischen dem Werkstück und dem Hintergrund ein zur korrekten Auswertung ausreichender Kontrast besteht. Dies ist insbesondere dann der Fall, wenn es sich um mehrfarbige Werkstücke handelt, oder wenn der Hintergrund unterschiedliche Helligkeiten aufweist. Ferner sind in der Praxis die am Arbeitsort herrschenden Lichtverhältnisse von nicht vorhersehbaren und nicht einplanbaren Augenblicksbedingungen abhängig, so z. B. davon, ob gerade die Sonne scheint oder es stark bewölkt ist, usw. Die vorgenannten Nachteile führen einerseits zu erheblichen Problemen bei der Festlegung der Quantisierungsschwelle und während des Arbeitsprozesses zu falschen Ergebnissen.

Der Erfindung liegt die Aufgabe zugrunde, ein industrielles Bildverarbeitungssystem anzugeben, bei welchem stets sichergestellt ist, daß zwischen dem Werkstück und dem Hintergrund ein ausreichender Kontrast besteht und die Wahl der Quantisierungsschwelle keine Schwierigkeiten bereitet.

Diese Aufgabe wird durch die im Patentanspruch 1 angegebenen Merkmale gelöst. Vorteilhafte Weiterbildungen ergeben sich aus den Unteransprüchen.

Die mit dem beanspruchten System erzielbaren vorteilhaften Eigenschaften ergeben sich aus einem Ausführungsbeispiel, welches im folgenden anhand der Figuren 1 bis 4 näher erläutert wird.

Es zeigt

Fig. 1    ein Blockschaltbild eines industriellen Bildverarbeitungssystems,

Fig. 2    ein Beispiel für ein zu verarbeitendes Werkstück,

Fig. 3    eine Skizze zur Erläuterung der Funktionsweise des in Fig. 1 gezeigten Bildverarbeitungssystems, und

Fig. 4    ein Diagramm zur Erläuterung der Auswahl der Aussteuerungskurve.

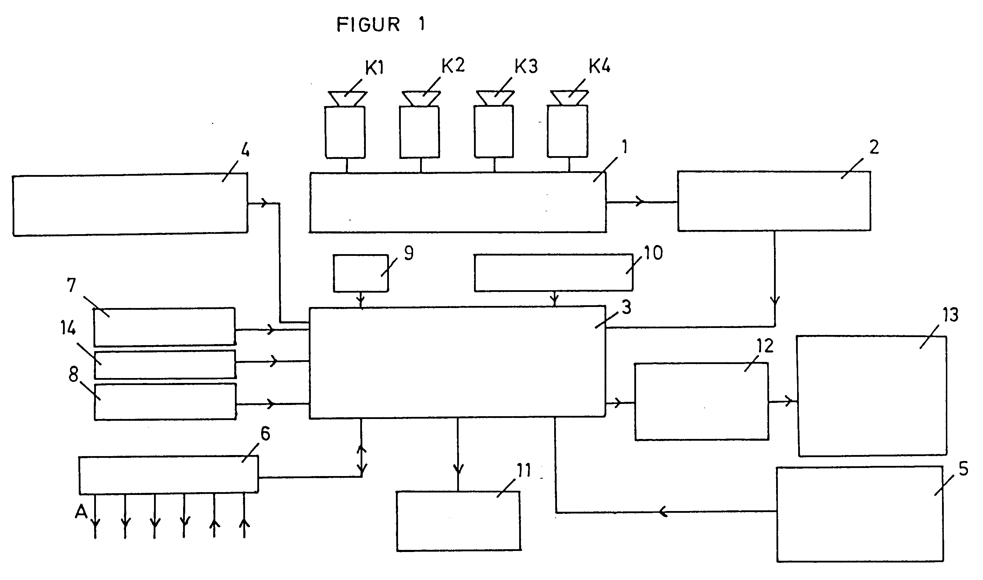

Die Figur 1 zeigt ein Blockschaltbild eines industriellen Bildverarbeitungssystems, bei dem bis zu vier Kameras K1, K2, K3 und K4 zur Aufnahme eines zu bearbeitenden Werkstückes auswählbar sind. Diese Kameras können auch so angeordnet werden, daß nacheinander unterschiedliche Aufgaben an unterschiedlichen Orten abgearbeitet werden können. Die von der (den) ausgewählten Kamera(s) gelieferten elektrischen Signale werden über eine Kamera-Anwahlschaltung (1) einer Videosignalverarbeitungsschaltung (2) zugeführt. Die Ausgangssignale der Videosignalverarbeitungsschaltung (2) werden einer Recheneinheit (3) zugeleitet. Der Recheneinheit (3) werden ferner Signale von einer Schaltung (4) zur Takterzeugung und Impulsaufbereitung, einem Bedienteil (5), einer Eingangs-/Ausgangsschaltung (6), und - je nach Anwendungsfall - einer Schaltung (7) zur Fadenkreuzerzeugung, einer Schaltung (8) zur Meßfenstererzeugung, einer Schaltung (14) zur Toleranzlinienerzeugung, einem Uhrbaustein (9) und einem Stückzähler (19) zugeführt. Die Recheneinheit (3) besitzt Ausgänge zur Lieferung von Signalen an die Eingangs-/Ausgangsschaltung (6), einen Drucker (11) und eine Schaltung (12) zur Texterzeugung, die ihrerseits (über einen nicht gezeichneten D/A-Wandler) mit einem Farbmonitor (13) verbunden ist.

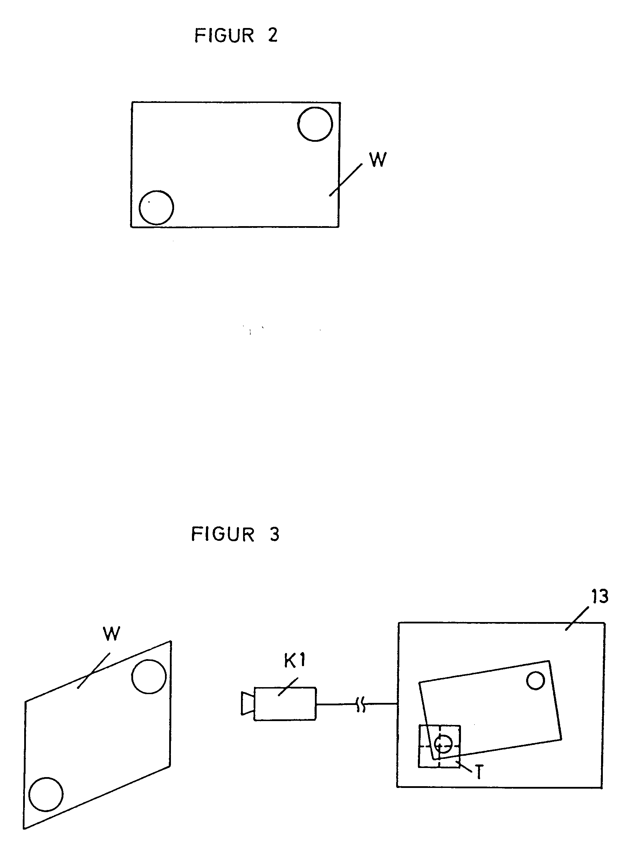

Die Funktionsweise des in Figur 1 gezeigten industriellen Bildverarbeitungssystems wird im folgenden anhand eines Anwendungsbeispiels näher erläutert. Im Rahmen dieses Anwendungsbeispieles soll das linke untere Loch eines Werkstückes, wie es in Figur 2 gezeigt ist, in eine Sollposition gebracht werden, um beispielsweise in einem Folgeschritt einen Paßstift in dieses Loch einsetzen zu können.

Hierzu wird dem System während des in Form eines Bildschirmdialoges ablaufenden Lernprozesses mitgeteilt, daß die Aufgabe des Systems darin besteht, ein Werkstück zu zentrieren und daß die Kamera K1 zur Aufnahme des Werkstückes verwendet werden soll. Ferner wird während des Lernprozesses das Werkstück relativ zur Kamera in gewünschter Weise ausgerichtet und aufgenommen. Weiterhin wird mittels (nicht gezeichneter) Richtungstasten auf dem Bedienteil (5) ein auf dem Bildschirm des Farbmonitors (13) eingeblendetes Fadenkreuz, welches von einem Toleranzrahmen umgeben ist, an einer Sollposition auf dem Bildschirm plaziert. Gegebenenfalls kann dieses Fadenkreuz einschließlich des Toleranzrahmens auf eine gewünschte Größe gebracht werden. Schließlich werden die Ausgänge gewählt und festgelegt. So soll im vorliegenden Fall Ausgang A der Eingangs-/Ausgangsschaltung (6) ansprechen, wenn eine Abweichung zwischen Soll- und Istposition vorliegt. Über diesen Ausgang A soll im vorliegenden Ausführungsbeispiel das Werkstück mittels eines Greifarmes verschoben werden.

Während des sich an den Lernprozeß anschließenden Arbeitsprozesses wird das Werkstück (W) von der Kamera K1 aufgenommen und auf dem Bildschirm (13) die momentane Lage des Werkstückes relativ zum Fadenkreuz, welches die Sollposition angibt, gezeigt. Dies ist in Figur 3 dargestellt.

In der Recheneinheit (3) wird nun überprüft, in welchem Quadranten des Toleranzrahmens (T) sich das Loch befindet. Dies geschieht durch Messung und Vergleich des Flächeninhalts jedes der 4 Quadranten des Toleranzrahmens. Aus den durch den Vergleich ermittelten Informationen werden Stellgrößen gewonnen, die über den obengenannten Ausgang (A) der Eingangs-/Ausgangsschaltung (6) den Greifarm zur Verschiebung des Werkstückes (W) in die Sollage ansteuern. Die Sollage ist erreicht, wenn der Flächeninhalt aller 4 Quadranten, in die das Loch durch das Fadenkreuz geteilt wird, gleich groß ist.

In vorteilhafter Weise werden in der Recheneinheit ausschließlich Informationen ausgewertet, die dem innerhalb des Toleranzrahmens (T) liegenden Bildteil entsprechen. Diese innerhalb des Toleranzrahmens liegenden Informationen sind vollkommen ausreichend, um in der Recheneinheit (3) ermitteln zu können, ob das Werkstück die Sollage aufweist oder nicht.

Durch diese Beschränkung der Auswertung auf die in einem Toleranzrahmen liegenden Bildteile wird erreicht, daß der Benutzer im Rahmen des Lernprozesses das Werkstück, das Fadenkreuz und den Toleranzrahmen derart plazieren kann, daß im Toleranzrahmen ein ausreichender Kontrast zwischen dem Werkstück und dem Hintergrund vorhanden ist. Dies ist deshalb möglich weil nur ein sehr kleiner Teil des Hintergrundes, welcher in vorteilhafter Weise vom Benutzer nahezu frei gewählt werden kann, für die Auswertung relevant ist. Alle übrigen Teile des Hintergrundes haben für die Auswertung keine Bedeutung. Damit kann der Benutzer durch die Wahl eines geeigneten Stückes Hintergrund die unerwünschten Einflüsse, die in der Praxis durch die im Gesamtbild auftretenden unterschiedlichen Hintergrundhelligkeiten auftreten, wesentlich reduzieren, da die in einem Bildsegment auftretenden Helligkeitsunterschiede in der Praxis sehr viel kleiner sind als die im Gesamtbild auftretenden. Das wiederum hat zur Folge, daß die eingangs beschriebenen Schaltungen zur Korrektur von ungleichmäßiger Ausleuchtung, Schattenfehler der Kamera(s) und Verschmutzungen des Hintergrundes u. U. weggelassen werden können.

Durch die Beschränkung auf die Auswertung der relevanten Bildteile wird im Vergleich zu bekannten Bildverarbeitungssystemen, bei denen der gesamte Bildinhalt ausgewertet wird, aber auch erreicht, daß die zu verarbeitende Datenmenge erheblich reduziert ist. Dies bringt enorme Kostenvorteile, da weniger Speicherplatz erforderlich ist. Ferner ist für die Auswertung der selektierten relevanten Bildteile wesentlich weniger Rechenzeit notwendig als für die Auswertung des gesamten Bildinhalts bei herkömmlichen Systemen.

Gemäß einer vorteilhaften Weiterbildung der Erfindung kann der Benutzer im Bedarfsfall leicht auf den Hintergrund für die kleinen relevanten Teile Einfluß nehmen und dort beispielsweise kleine weiße oder schwarze Tafeln plazieren, um einen ausreichenden Kontrast zwischen Werkstück und Hintergrund sicherzustellen.

Bei Werkstücken, die stark unterschiedliche Farben besitzen, kann beispielsweise ein selbstleuchtender Flächenstrahler als Hintergrund installiert werden, der auf jeden Fall für einen ausreichenden Kontrast und damit eine einwandfreie Auswertung sorgt.

Die genannte Beschränkung auf die Auswertung kleiner Bildteile ermöglicht es aber auch, für jeden der ausgewählten Bildteile die Quantisierungsschwelle individuell festzulegen bzw. zu ermitteln. Dies geschieht in vorteilhafter Weise automatisch während des Arbeitsprozesses in Echtzeit durch eine analoge Mittelwertbildung aus den Helligkeitswerten innerhalb jedes ausgewählten Bildteiles bzw. Fensters. Die automatische Festlegung der Quantisierungsschwelle(n) während des Arbeitsprozesses bringt den Vorteil, daß die Quantisierungsschwelle stets den momentanen Lichtverhältnissen, d. h. den Augenblicksbedingungen, angepaßt ist. Probleme aufgrund ständig wechselnder Augenblicksbedingungen treten nicht mehr auf. Für den Benutzer entfällt die Notwendigkeit, während des Lernprozesses per Bildschirmdialog eine oder mehrere Quantisierungsschwelle(n) festlegen zu müssen.

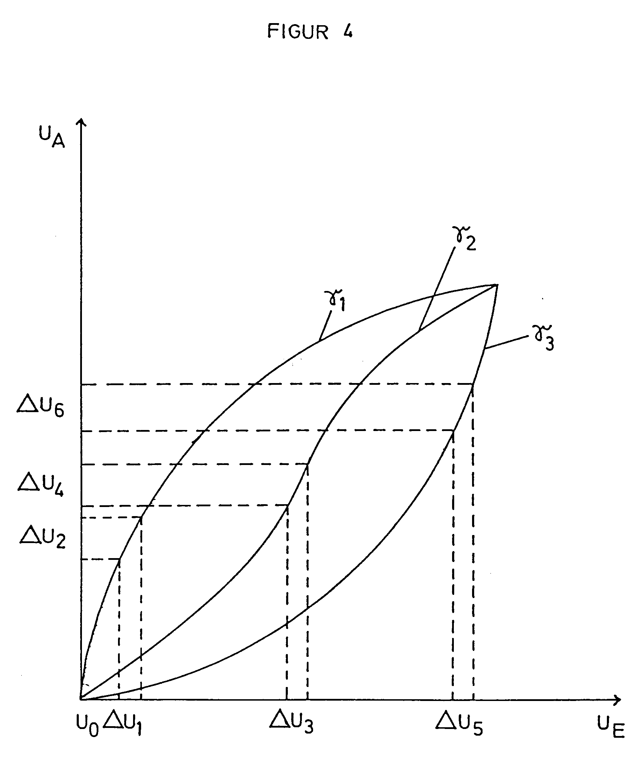

Die genannte Beschränkung auf die Auswertung kleiner Bildteile ermöglicht es ferner, für jeden der ausgewählten Bildteile die Aussteuerungskurve individuell festzulegen bzw. zu ermitteln. Auch dies geschieht in vorteilhafter Weise automatisch während des Arbeitsprozesses in Echtzeit. Die damit erzielbaren Eigenschaften werden im folgenden anhand des Diagrammes gemäß Figur 4 näher erläutert.

Das Diagramm zeigt die Eingangsspannung $U_E$ der (nicht) gezeichneten) Schaltung zur Veränderung der Aussteuerungskurve in Abhängigkeit von der Ausgangsspannung $U_A$ dieser Schaltung für drei verschiedene Gammawerte. Auf der Eingangsspannungsachse sind beispielhaft die Eingangsspannungswerte $U_0$ bzw. Eingangsspannungsintervalle $\Delta U_1$, $\Delta U_3$ und $\Delta U_5$ aufgetragen, die einem schwarzen bzw. dunklen, mittleren und hellen Bildinhalten entsprechen. Die Aussteuerungskurve wird individuell für jeden der ausgewählten Bildteile derart gewählt, daß die einer Eingangsspannungsänderung zugeordnete Ausgangsspannungsänderung maximal wird. So wird beispielsweise für dunkle Bildinhalte (Eingangsspannungsintervall $\Delta U_1$) die durch $\gamma 1$ gekennzeichnete Aussteuerkurve gewählt und damit das Ausgangsspannungsintervall $\Delta U_2$ dem Eingangsspannungsintervall $\Delta U_1$ zugeordnet. Für mittlere Bildinhalte (Eingangsspannungsintervall $\Delta U_3$) wird die durch $\gamma_2$ und für helle Bildinhalte (Eingangsintervall $\Delta U_5$) die durch $\gamma_3$ gekennzeichnete Austeuerkurve gewählt.

Diese Wahl der Austeuerkurve erfolgt - wie bereits oben erwähnt - automatisch. Dazu muß erkannt werden, ob das Signal im ausgewählten Bildteil überwiegend bei dunkel, mittel oder hell liegt. Zu dieser Erkennung kann die bereits im Zusammenhang mit der Festlegung der Quantisierungsschwelle genannte Schaltung mitverwendet werden.

Der wesentliche Vorteil liegt auch hier in der dynamischen Anpassung an die momentanen, während des Arbeitsprozesses vorliegenden Lichtverhältnisse. Eine Wahl der Aussteuerungskurve während des Lernprozesses ist damit nicht mehr notwendig.

**Patentansprüche**

1. Industrielles Bildverarbeitungssystem mit
   - mindestens einer Aufnahmekamera (K1),
   - einer Videosignalverarbeitungsschaltung (2),
   - einer Bedieneinheit (5) zur Eingabe von Befehlen,
   - einem Monitor (13) zur Anzeige des Videosignales,
   - einer mit der Videosignalverarbeitungsschaltung verbundenen Recheneinheit (3), in der ausschließlich die einem oder mehreren ausgewählten Bildfenstern entsprechenden Informationen ausgewertet werden,
   - einer mit einer Recheneinheit (3) verbundenen Eingangs-/Ausgangsschaltung (6),
   - einer Schaltung zur Ermittlung einer oder mehrerer Quantisierungsschwellen aus den Helligkeitswerten des Videosignales eines oder mehrerer ausgewählter Bildfenster

   **dadurch gekennzeichnet,** daß
   - die Quantiesierungsschwelle(n) durch analoge Mittelwertbildung aus den Helligkeitswerten jedes ausgewählten Bildfensters automatisch ermittelt wird,
   - die mittlere Helligkeit jedes Bildfensters bestimmt wird und in Abhängigkeit von der mittleren Bildhelligkeit eine von mehreren Aussteuerungskurven angewählt wird, wobei die Aussteuerungskurve die Aufweitung des Amplitudenbereiches der jeweiligen Helligkeitssignale beschreibt.

2. Industrielles Bildverarbeitungssystem nach Anspruch 1, **dadurch gekennzeichnet,** daß die Schaltung zur Ermittlung der Quantisierungsschwelle(n) zur Veränderung der Aussteuerkurve mitverwendet wird.

3. Industrielles Bildverarbeitungssystem nach Anspruch 1 oder 2, **gekennzeichnet durch** eine oder mehrere Vorrichtungen, die zwischen dem Hintergrund und dem Werkstück angeordnet sind, um den Kontrast zu erhöhen.

4. Industrielles Bildverarbeitungssystem nach Anspruch 3, **dadurch gekennzeichnet,** daß es sich bei der (den) genannten Vorrichtung(en) um einen selbstleuchtenden Flächenstrahler handelt.

## Claims

1. Industrial image processing system having
   - at least one pick-up camera (K1),
   - a video signal processing circuit (2),
   - an operating unit (5) to input commands,
   - a monitor (13) to display the video signal,
   - a computer unit (3), which is connected to the video signal processing circuit and in which exclusively the information items corresponding to one or more selected image windows are evaluated,
   - an input/output circuit (6) connected to a computer unit (3),
   - a circuit for determining one or more quantisation thresholds from the brightness values of the video signal of one or more selected image windows,
   characterised in that
   - the quantisation threshold(s) is automatically determined by analog mean value formation from the brightness values of each selected image window,
   - the mean brightness of each image window is determined and, as a function of the mean image brightness, one of a plurality of match curves is selected, the match curve describing the expansion of the amplitude range of the respective brightness signals.

2. Industrial image processing system according to Claim 1, characterised in that the circuit for determining the quantisation threshold(s) is also employed for altering the match curve.

3. Industrial image processing system according to Claim 1 or 2, characterised by one or more devices which are disposed between the background and the workpiece, in order to increase the contrast.

4. Industrial image processing system according to Claim 3, characterised in that said device(s) comprise(s) a self-luminous surface radiator.

## Revendications

1. Système industriel de traitement d'images comportant
   - au moins une caméra d'enregistrement (K1),
   - un circuit (2) de traitement du signal vidéo,
   - une unité de commande (5) pour introduire des ordres,
   - un moniteur (13) pour afficher le signal vidéo,
   - une unité de calcul (3) raccordée au circuit de traitement du signal vidéo et dans laquelle exclusivement les informations correspondant à une ou plusieurs fenêtres sélectionnées de l'image sont évaluées,

- un circuit d'entrée/sortie (6) raccordé à l'unité de calcul (3),
- un circuit pour déterminer un ou plusieurs seuils de quantification à partir des valeurs de luminosité du signal vidéo d'une ou de plusieurs fenêtres choisies de l'image,

caractérisé par le fait que

- le ou les seuils de quantification sont déterminés automatiquement par formation analogique de la valeur moyenne à partir des valeurs de luminosité de chaque fenêtre sélectionnée de l'image,
- la luminosité moyenne de chaque fenêtre de l'image est déterminée et l'une parmi plusieurs courbes de modulation est sélectionnée en fonction de la luminosité moyenne de l'image, la courbe de modulation décrivant l'élargissement de la gamme d'amplitudes des signaux respectifs de luminosité.

2. Système industriel de traitement d'images selon la revendication 1, caractérisé en ce que le circuit servant à déterminer le ou les seuils de quantification est utilisé simultanément pour modifier la courbe de modulation.

3. Système industriel de traitement d'images selon la revendication 1 ou 2, caractérisé par un ou plusieurs dispositifs, qui sont disposés entre le fond et la pièce à usiner, pour accroître le contraste.

4. Système industriel de traitement d'images selon la revendication 3, caractérisé en ce qu'en ce qui concerne le ou les dispositifs indiqués, il s'agit d'émetteurs luminescents en nappe.

FIGUR 1

FIGUR 2

FIGUR 3

FIGUR 4